# EUROPEAN PATENT SPECIFICATION

(11) **EP 0 923 174 B1**
(45) Date of publication and mention of the grant of the patent: **24.11.2004**
(21) Application number: 98304406.6
(22) Date of filing: 04.06.1998
(51) Int. Cl.: H01S 5/068, G11B 7/125

(54) **Apparatus and method for compensating for temperature of laser diode**
Vorrichtung und Verfahren zur Temperaturkompensation von Laserdioden
Dispositif et méthode de compensation de la température de laser à diodes

(30) Priority: 12.12.1997 KR 9768345
(43) Date of publication of application: 16.06.1999
(73) Proprietor: Samsung Electronics Co., Ltd., Suwon-city, Kyungki-do (KR)
(72) Inventor: Tatsuhiro, Otsuka, Suwon-city, Kyunkgi-do (KR)
(74) Representative: Chugg, David John

(56) References cited:
- EP-A- 0 061 034
- US-A- 4 813 046
- US-A- 4 856 008
- PATENT ABSTRACTS OF JAPAN vol. 097, no. 009, 30 September 1997 & JP 09 139535 A (RICOH OPT IND CO LTD), 27 May 1997

## Description

The present invention relates to an apparatus and a method for compensating for the temperature of a laser diode in an optical disk field, and more particularly, to an apparatus and a method for compensating for the temperature of a laser diode in which output power changes according to the variation of the temperature.

It is possible to read information from a disk without error only when light is stably emitted from a laser diode. This is achieved by controlling a luminous efficiency which changes according to the variation of the temperature of a narrow-wavelength laser diode in an optical disk field. Accordingly, it is possible to heighten the reliability of an optical recording and reproduction system.

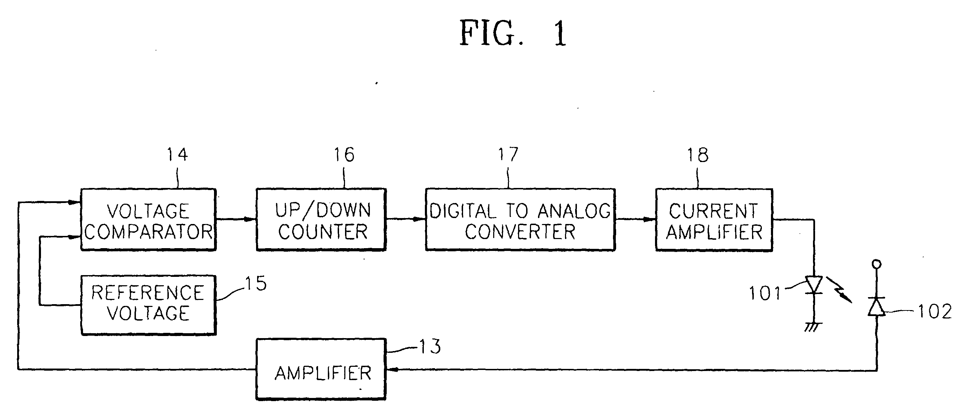

Figure 1 is a block diagram showing a conventional temperature compensation apparatus of a laser diode. In Figure 1, the output of a laser diode 101 is converted into a voltage signal by a photodiode 102. An amplifier 13 amplifies a very low voltage output from the photodiode 102 to a signal level. A voltage comparator 14 compares the voltage amplified by the amplifier 13 with a reference voltage 15, and generates an error. Here, the reference voltage 15 can be generated by a reference voltage generator and can be previously set.

An up/down counter 16 generates an error voltage by correcting the error. A digital-to-analog converter 17 converts the corrected error voltage into an analog voltage signal. A current amplifier 18 converts the analog voltage signal into a current signal for driving the laser diode 101 and applies the current signal to the laser diode 101. The output power of the laser diode 101 is controlled by continuously performing such an operation.

However, it is hard to control the variation of the optical output of the laser diode due to temperature by using only the up/down counter 16, since the variation of the temperature is severe in the narrow-wavelength laser diode. Therefore, it is impossible to compensate for the variation of the optical output by the conventional apparatus shown in Figure 1.

With a view to solve or reduce the above problem, it is an aim of embodiments of the present invention to provide a temperature compensation apparatus of a laser diode in which it is possible to reduce a control error by extending the range of the control voltage of the laser diode, considering deterioration due to the variation of the temperature.

It is another aim of embodiments of the present invention to provide a temperature compensation method of a laser diode, for stabilizing a luminous efficiency by extending the range of the control voltage of the laser diode, considering the deterioration due to the variation of the temperature.

According to a first aspect of the invention as defined in claim 1, there is provided a temperature compensation apparatus of a laser diode, for controlling the output power of a laser diode according to the variation of a temperature, comprising: a first generator for generating an error voltage between a voltage corresponding to the output power of the laser diode and a reference voltage, the first generator comprising: a comparator for comparing the voltage corresponding to the output power of the laser diode with the reference voltage, and generating the error voltage and a first counter for counting the error voltage, generating the corrected error voltage as a first count value based on the output power, and performing up and down counting in order to change the error voltage in response to a detection signal; and a second generator for generating a corrected control voltage by receiving the error voltage, based on the output power and for outputting the corrected control voltage to the laser diode for a predetermined period of time, the second generator comprising: a detector for detecting overflow and underflow of the first count value and for generating the detection signal, a second counter for performing down and up counting in response to the detection signal, in the reverse order to that of the first counter, and a control voltage generator for generating the corrected control voltage on the basis of the corrected error voltage and for generating the corrected control voltage obtained by adding the output of the first counter to the output of the second counter when the first count value overflows and underflows; wherein the predetermined period of time ends when the level of the error voltage becomes a predetermined offset value; the first counter performs up counting to a predetermined offset value when the first count value underflows, and performs down counting to the offset value when the first count value overflows, in response to the detection signal; the second counter performs down counting from a first value until the output of the first counter becomes the offset value, and then renews the down counted value of the second counter to the first value, when the first count value underflows, and performs up counting from a second value until the output of the first counter becomes the offset value, and then renews the up counted value of the first counter to the second value, when the first count value overflows; and the initial value of the first value and the second value is set to the offset value.

Preferably, the first and second counters are first and second up/down counters: the second up/down counter being arranged for performing up and down counting according to the detection signal, and being arranged for counting in the reverse order to that of the first up/down counter; and the control voltage generator comprises: an adder and a current converter, the adder being arranged for generating the control voltage based on the corrected error voltage and for applying the uniform control voltage, obtained by adding the output of the first up/down counter to that of the second up/down counter, to the current converter when the first count value overflows and underflows.

Preferably, the first up/down counter performs up counting to a predetermined offset value when the first count value underflows, and performs down counting to the offset value when the first count value overflows.

Preferably, the second up/down counter performs down counting from a first value until the output of the first up/down counter becomes the offset value, and then renews the down counted value of the second up/down counter to the first value according to the detection signal, when the first count value underflows, and performs up counting from a second value until the output of the first up/down counter becomes the offset value, and then renews the up counted value of the first up/down counter to the second value, when the first count value overflows.

Preferably, the initial value of the first value and the second value is set to the offset value.

According to a second aspect of the invention as defined in claim 6, there is provided a temperature compensation method of a laser diode, for controlling the output power of a laser diode according to a temperature change, comprising the steps of: (a) generating an error voltage between a voltage corresponding to the output power of the laser diode and a reference voltage; and (b) generating a control voltage by correcting the error voltage based on the output power and extending the range of a control voltage by outputting a corrected control voltage to the laser diode for a predetermined period of time when the level of the error voltage overflows or underflows; the step (b) further comprising the sub steps of: (b1) counting the error voltage, generating a first count value corresponding to the error voltage corrected based on the output power, and up and down counting the first count value in order to change the corrected error voltage according to a detection signal; (b2) detecting whether the first count value overflows or underflows and generating the detection signal; (b3) performing down and up counting according to the detection signal, in the reverse order to that of the first count value in the step(b1), and generating a second count value; and (b4) generating a control voltage based on the corrected error voltage and generating a uniform control voltage obtained by adding the first count value to the second count value, when the first count value overflows or underflows; wherein up counting is performed to a predetermined offset value according to the detection signal, when the first count value underflows, and down counting is performed to the offset value when the first count value overflows, in the step (b1); and down counting is performed from a first value until the first count value becomes the offset value, and then the down counted value is renewed to the first value, when the first count value underflows, and up counting is performed from a second predetermined value until the first count value becomes the offset value, and then the up counted value is renewed to the second value, when the first count value overflows, according to the detection signal, in the step (b3).

For a better understanding of the invention, and to show how embodiments of the same may be carried into effect, reference will now be made, by way of example, to the accompanying diagrammatic drawings, in which:
Figure 1 is a block diagram of a conventional temperature compensation apparatus of a laser diode;
Figure 2 is a block diagram of a temperature compensation apparatus of a laser diode, according to an embodiment of the present invention;
Figures 3A to 3C describe the operation of the apparatus shown in Figure 2 when the luminous efficiency of the laser diode rises; and
Figures 4A to 4C describe the operation of the apparatus shown in Figure 2 when the luminous efficiency of the laser diode falls.

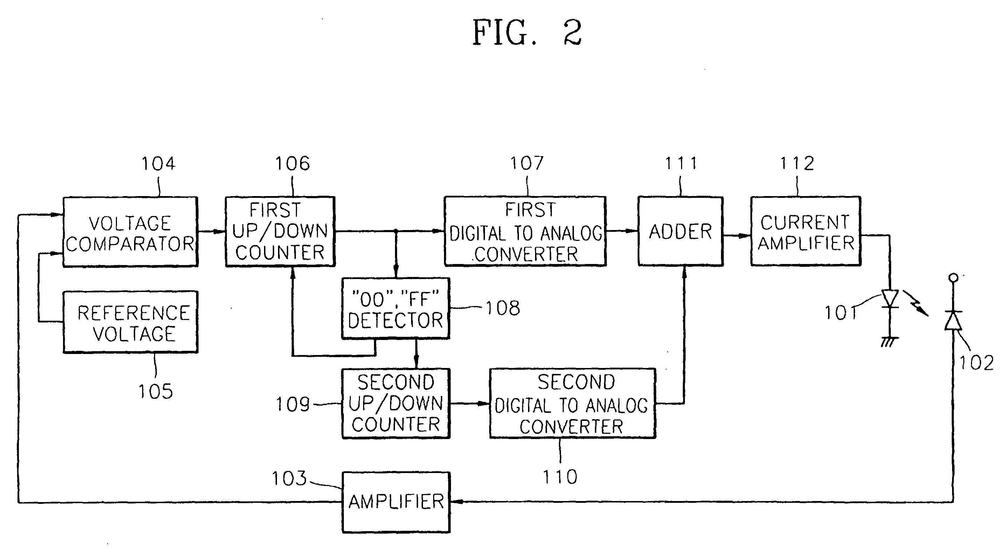

Referring to Figure 2, two up/down counters 106 and 109 and two digital-to-analog (D/A) converters 107 and 110 are used, while one up/down counter and one digital-to-analog converter are used in conventional technology. Other new elements are an adder 111 for adding the output of the first digital-to-analog converter 107 to that of the second digital-to-analogue converter 110, and an underflow and overflow ("00" and "FF") detector (referred to as a "detector" 108, hereinafter) for detecting when the first up/down counter 106 underflows or overflows.

The operation of the apparatus shown in Figure 2 will now be described.

When a laser diode 101 emits light, a very low voltage corresponding to a received light signal of a photo diode 102 is amplified to a signal level by an amplifier 103. A voltage comparator 104 compares the output voltage of the amplifier 103 with a reference voltage 105 and applies the error to the first up/down counter 106. The first up/down counter 106 applies a corrected error voltage to the first digital-to-analog converter 107 and the detector 108.

During normal operation in which the first up/down counter 106 does not underflow or overflow, the second up/down counter 109 applies a predetermined uniform value (an initial value is "80") to the adder 111 through thesecond digital-to-analog converter 110. The uniform value is renewed when the underflow or overflow is generated.

The adder 111 adds the corrected error voltage, supplied from the first up/down counter 106 through the first digital-to-analog converter 107, to the voltage corresponding to the uniform value supplied from the second up/down counter 109 through the second digital-to-analog converter 110. A current amplifier 112 applies a drive current corresponding to the sum voltage to the laser diode 101, to control the output power of the laser diode 101.

Meanwhile, when the first up/down counter 106 underflows ("00") or overflows ("FF") due to the temperature variation, the detector 108 generates a flag and applies it to the first and second up/down counters 106 and 109. At this time, the second up/down counter 109 is enabled according to the flag supplied from the detector 108. The first up/down counter 106 begins a count operation for performing a correction mode different from a normal mode, according to the flag supplied from the detector 108. The flag can be referred to as a detection signal.

Additionally, in conventional technology, when the up/down counter underflows or overflows due to the temperature variation of the laser diode, the counter stops operating and turns off the system. When an underflow occurs, in which the count value (referred to as "first count value", hereinafter) of the first up/down counter 106 becomes "00", the first up/down counter 106 counts up to a predetermined offset value (here, "80"). At the same time, the second up/down counter 109 begins down counting from a predetermined value (an initial value is "80"), continuously performs down counting until the first count value becomes the offset value ("80"). Once the first count value becomes the offset value ("80"), the second up/down counter 109 maintains its count value until the underflow or overflow occurs again.

Namely, the second up/down counter 109 begins down counting from a predetermined value (an initial value is "80") when the first count value underflows, stops down counting when the first count value becomes the offset value ("80"), maintains the value at which the counting stopped, and performs down counting or up counting from the maintained value when the first count value underflows or overflows again.

When an overflow occurs, in which the first count value becomes "FF", the first up/down counter 106 performs down counting to a predetermined value (an initial value is "80"). At the same time, the second up/down counter 109 begins up counting from the offset value ("80"), and continues up counting until the first count value becomes the offset value ("80"). Once the first count value becomes the offset value ("80"), the second up/down counter 109 maintains its value, until the overflow or underflow occurs again.

The second digital-to-analog converter 110 converts the output of the second up/down counter 109 into an analog signal. The adder 111 adds the output of the first digital-to-analog converter 107 to that of the second digital-to-analog converter 110. The current amplifier 112 converts the sum voltage into a current signal to drive the laser diode 101. While the second up/down counter 109 operates due to the first up/down counter 106 overflowing or underflowing, the output of the adder 111 always has a uniform voltage. The laser diode 101 is driven by the uniform control voltage. At this time, the first up/down counter 106 performs up counting or down counting until the first count value becomes the offset value ("80").

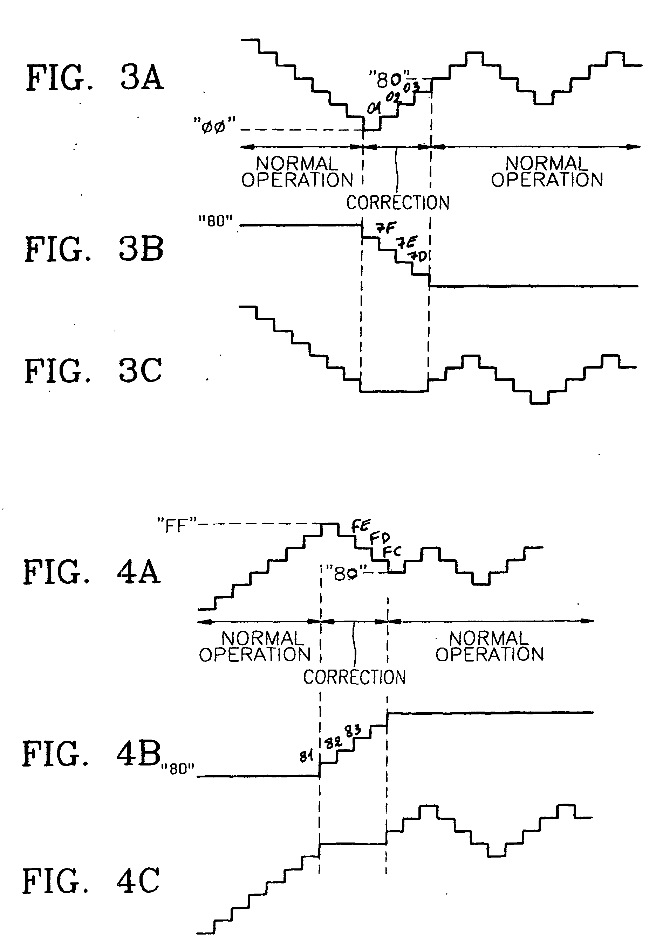

Figure 3 will be explained in relation to Figure 4 in order to aid the explanation of the operation of the present invention.

Figure 3 describes the operation of the first and second up/down counters 106 and 109 and a control voltage applied to the current amplifier 112 for driving the laser diode 101, when the luminous efficiency of the laser diode 101 rises.

As shown in Figure 3A, when the first up/down counter 106 underflows ("00"), namely, the temperature of the laser diode 101 falls and the luminous efficiency rises, the second up/down counter 109 performs down counting from the offset value ("80") as "7F, 7E, 7D, ..." as shown in Figure 3B. At the same time, the first up/down counter 106 performs up counting as "01, 02, 03, ..." as shown in Figure 3A. When the count value of the first up/down counter 106 reaches "80", the second up/down counter 109 stops down counting. Only the first up/down counter 106 continuously operates for stabilizing the luminous efficiency of the laser diode 101.

When the first up/down counter 106 underflows, the output of the first up/down counter 106 is added to that of the second up/down counter 109 by the adder 111, to obtain a uniform corrected control voltage shown in Figure 3C, which is applied to the current amplifier 112.

Figure 4 describes the operation of the first and second up/down counters 106 and 109 and the control voltage applied to the current amplifier 112 for driving the laser diode 101, when the luminous efficiency of the laser diode 101 falls.

When the first up/down counter 106 overflows ("FF"), namely, when the temperature of the laser diode 101 rises and the luminous efficiency falls, the second up/down counter 109 performs up counting as "81, 82, 83, ..." from the offset value ("80") as shown in Figure 4B. At the same time, the first up/down counter 106 performs down counting as "FE, FD, FC, ..." as shown in Figure 4A. When the count value of the first up/down counter 106 reaches "80", the second up/down counter 109 stops up counting. Only the first up/down counter 106 continuously operates for stabilizing the luminous efficiency of the laser diode 101.

When the first up/down counter 106 overflows, the output of the first up/down counter 106 is added to that of the second up/down counter 109 by the adder 111, to obtain a uniform corrected control voltage shown in Figure 4C, which is applied to the current amplifier 112.

Therefore, in embodiments of the present invention, the range of the control voltage is extended and the control error is reduced, due to the addition of the second up/down counter 109, the detector 108, and the second digital-to-analog converter 110.

Embodiments of the present invention can be constructed using various bit resolutions. However, an eight bit structure is preferable, considering manufacturing costs.

According to embodiments of the present invention, it is possible to generate a control voltage based sufficiently on the luminous efficiency of a laser diode, thus providing a stabilized luminous efficiency and lower control error.

## Claims

1. A temperature compensation apparatus of a laser diode (101), for controlling the output power of a laser diode (101) according to the variation of a temperature, comprising:
a first generator (104-107) for generating an error voltage between a voltage corresponding to the output power of the laser diode (101) and a reference voltage, the first generator comprising: a comparator (104) for comparing the voltage corresponding to the output power of the laser diode (101) with the reference voltage (105), and generating the error voltage and a first counter (106) for counting the error voltage, generating the corrected error voltage as a first count value based on the output power, and performing up and down counting in order to change the error voltage in response to a detection signal; and
a second generator (108-110) for generating a corrected control voltage by receiving the error voltage, based on the output power and for outputting the corrected control voltage to the laser diode (101) for a predetermined period of time, the second generator comprising: a detector (108) for detecting overflow and underflow of the first count value and for generating the detection signal, a second counter (109) for performing down and up counting in response to the detection signal, in the reverse order to that of the first counter (106), and a control voltage generator (111, 112) for generating the corrected control voltage on the basis of the corrected error voltage and for generating the corrected control voltage obtained by adding the output of the first counter (106) to the output of the second counter (110) when the first count value overflows and underflows; wherein
the predetermined period of time ends when the level of the error voltage becomes a predetermined offset value;
the first counter (106) performs up counting to a predetermined offset value when the first count value underflows, and performs down counting to the offset value when the first count value overflows, in response to the detection signal;
the second counter (109) performs down counting from a first value until the output of the first counter (106) becomes the offset value, and then renews the down counted value of the second counter (109) to the first value, when the first count value underflows, and performs up counting from a second value until the output of the first counter (106) becomes the offset value, and then renews the up counted value of the first counter (106) to the second value, when the first count value overflows;
and the initial value of the first value and the second value is set to the offset value.

2. A temperature compensation apparatus according to claim 1, wherein:
the first and second counters (106, 109) are first and second up/down counters: the second up/down counter (109) being arranged for performing up and down counting according to the detection signal, and being arranged for counting in the reverse order to that of the first up/down counter (106); and
the control voltage generator comprises: an adder (111) and a current converter (112), the adder (111) being arranged for generating the control voltage based on the corrected error voltage and for applying the uniform control voltage, obtained by adding the output of the first up/down counter (106) to that of the second up/down counter (110), to the current converter (112) when the first count value overflows and underflows.

3. The apparatus of claim 2, wherein the first up/down counter (106) performs up counting to a predetermined offset value when the first count value underflows, and performs down counting to the offset value when the first count value overflows.

4. The apparatus of claim 3, wherein the second up/down counter (109) performs down counting from a first value until the output of the first up/down counter (106) becomes the offset value, and then renews the down counted value of the second up/down counter (109) to the first value according to the detection signal, when the first count value underflows, and performs up counting from a second value until the output of the first up/down counter (106) becomes the offset value, and then renews the up counted value of the first up/down counter (106) to the second value, when the first count value overflows.

5. The apparatus of claim 4, wherein the initial value of the first value and the second value is set to the offset value.

6. A temperature compensation method of a laser diode, for controlling the output power of a laser diode (101) according to a temperature change, comprising the steps of:
(a) generating an error voltage between a voltage corresponding to the output power of the laser diode and a reference voltage; and
(b) generating a control voltage by correcting the error voltage based on the output power and extending the range of a control voltage by outputting a corrected control voltage to the laser diode for a predetermined period of time when the level of the error voltage overflows or underflows;
the step (b) further comprising the sub steps of:
(b1) counting the error voltage, generating a first count value corresponding to the error voltage corrected based on the output power, and up and down counting the first count value in order to change the corrected error voltage according to a detection signal;
(b2) detecting whether the first count value overflows or underflows and generating the detection signal;
(b3) performing down and up counting according to the detection signal, in the reverse order to that of the first count value in the step(b1), and generating a second count value; and
(b4) generating a control voltage based on the corrected error voltage and generating a uniform control voltage obtained by adding the first count value to the second count value, when the first count value overflows or underflows; wherein up counting is performed to a predetermined offset value according to the detection signal, when the first count value underflows, and down counting is performed to the offset value when the first count value overflows, in the step (b1); and down counting is performed from a first value until the first count value becomes the offset value, and then the down counted value is renewed to the first value, when the first count value underflows, and up counting is performed from a second predetermined value until the first count value becomes the offset value, and then the up counted value is renewed to the second value, when the first count value overflows, according to the detection signal, in the step (b3).

## Patentansprüche

1. Temperaturkompensationsvorrichtung einer Laserdiode (101) zum Steuern der Ausgangsleitung einer Laserdiode (101) entsprechend der Änderung einer Temperatur, die umfasst:
eine erste Erzeugungseinrichtung (104-107), die eine Fehlerspannung zwischen einer Spannung, die der Ausgangsleistung der Laserdiode (101) entspricht, und einer Bezugsspannung erzeugt, wobei die erste Erzeugungseinrichtung umfasst:
einen Komparator (104), der die Spannung, die der Ausgangsleistung der Laserdiode (101) entspricht, mit der Bezugsspannung (105) vergleicht und die Fehlerspannung erzeugt, sowie einen ersten Zähler (106), der in Reaktion auf ein Erfassungssignal die Fehlerspannung zählt, die korrigierte Fehlerspannung als einen ersten Zählwert auf Basis der Ausgangsleistung erzeugt und Aufwärts- sowie Abwärtszählen durchführt, um die Fehlerspannung zu ändern; und
eine zweite Erzeugungseinrichtung (108-110), die eine korrigierte Steuerspannung durch Empfangen der Fehlerspannung auf Basis der Ausgangsleistung erzeugt und die korrigierte Steuerspannung über einen vorgegebenen Zeitraum an die Laserdiode (101) ausgibt, wobei die zweite Erzeugungseinrichtung umfasst:
einen Detektor (108), der Überlauf und Unterlauf des ersten Zählwertes erfasst und das Erfassungssignal erzeugt, einen zweiten Zähler (109), der Abwärts- und Aufwärtszählen in Reaktion auf das Erfassungssignal in umgekehrter Reihenfolge zu dem ersten Zähler (106) durchführt, und eine Einrichtung (111, 112) zum Erzeugen einer Steuerspannung, die die korrigierte Steuerspannung auf Basis der korrigierten Fehlerspannung erzeugt und die korrigierte Steuerspannung erzeugt, die ermittelt wird, indem der Ausgang des ersten Zählers (106) zu dem Ausgang des zweiten Zählers (110) addiert wird, wenn der erste Zählwert überläuft und unterläuft; wobei:
der vorgegebene Zeitraum endet, wenn der Pegel der Fehlerspannung ein vorgegebener Kompensationswert wird;
der erste Zähler (106) in Reaktion auf das Erfassungssignal Aufwärtszählen bis zu einem vorgegebenen Kompensationswert durchführt, wenn der erste Zählwert unterläuft, und Abwärtszählen bis zu dem Kompensationswert durchführt, wenn der erste Zählwert überläuft;
der zweite Zähler (109) Abwärtszählen von einem ersten Wert durchführt, bis der Ausgang des ersten Zählers (106) der Kompensationswert wird, und dann den abwärts gezählten Wert des zweiten Zählers (109) auf den ersten Wert erneuert, wenn der erste Zählwert unterläuft, und Aufwärtszählen von einem zweiten Wert durchführt, bis der Ausgang des ersten Zählers (106) der Kompensationswert wird, und dann den aufwärts gezählten Wert des ersten Zählers (106) auf den zweiten Wert erneuert, wenn der erste Zählwert überläuft;
und der Anfangswert des ersten Wertes sowie des zweiten Wertes auf den Kompensationswert eingestellt ist.

2. Temperaturkompensationsvorrichtung nach Anspruch 1, wobei:
der erste und der zweite Zähler (106, 109) ein erster und ein zweiter Aufwärts-/Abwärts-Zähler sind und der zweite Aufwärts-/Abwärts-Zähler (109) so eingerichtet ist, dass er entsprechend dem Erfassungssignal Aufwärts- und Abwärtszählen durchführt, und so eingerichtet ist, dass er in der umgekehrten Reihenfolge zu dem ersten Aufwärts-/Abwärts-Zähler (106) zählt; und
die Einrichtung zum Erzeugen der Steuerspannung umfasst:
einen Addierer (111) sowie einen Stromwandler (112), wobei der Addierer (111) so eingerichtet ist, dass er die Steuerspannung auf Basis der korrigierten Fehlerspannung erzeugt und die gleichmäßige Steuerspannung, die ermittelt wird, indem der Ausgang des ersten Aufwärts-/Abwärts-Zählers (106) zu dem des zweiten Aufwärts-/Abwärts-Zählers (110) addiert wird, an den Stromwandler (112) anlegt, wenn der erste Zählwert überläuft und unterläuft.

3. Vorrichtung nach Anspruch 2, wobei der erste Aufwärts-/Abwärts-Zähler (106) Aufwärtszählen bis zu einem vorgegebenen Kompensationswert durchführt, wenn der erste Zählwert unterläuft, und Abwärtszählen bis zu dem Kompensationswert durchführt, wenn der erste Zählwert überläuft.

4. Vorrichtung nach Anspruch 3, wobei der zweite Aufwärts-/Abwärts-Zähler (109) entsprechend dem Erfassungssignal Abwärtszählen von einem ersten Wert durchführt, bis der Ausgang des ersten Aufwärts-/Abwärts-Zählers (106) der Kompensationswert wird, und dann den abwärts gezählten Wert des zweiten Aufwärts/Abwärts-Zählers (109) auf den ersten Wert erneuert, wenn der erste Zählwert unterläuft, und Aufwärtszählen von einem zweiten Wert durchführt, bis der Ausgang des ersten Aufwärts-/Abwärts-Zählers (106) der Kompensationswert wird, und dann den aufwärts gezählten Wert des ersten Aufwärts-/Abwärts-Zählers (106) auf den zweiten Wert erneuert, wenn der erste Zählwert überläuft.

5. Vorrichtung nach Anspruch 4, wobei der Anfangswert des ersten Wertes und des zweiten Wertes auf den Kompensationswert eingestellt ist.

6. Temperaturkompensationsverfahren einer Laserdiode zum Steuern der Ausgangsleistung einer Laserdiode (101) entsprechend einer Temperaturänderung, das die folgenden Schritte umfasst:
a) Erzeugen einer Fehlerspannung zwischen einer Spannung, die der Ausgangsleistung der Laserdiode entspricht, und einer Bezugsspannung; und
b) Erzeugen einer Steuerspannung durch Korrigieren der Fehlerspannung auf Basis der Ausgangsleistung und Ausdehnen des Bereiches einer Steuerspannung durch Ausgeben einer korrigierten Steuerspannung an die Laserdiode über einen vorgegebenen Zeitraum, wenn der Pegel der Fehlerspannung überläuft oder unterläuft;
wobei der Schritt (b) des Weiteren die folgenden Teilschritte umfasst:
b1) entsprechend einem Erfassungssignal Zählen der Fehlerspannung, Erzeugen eines ersten Zählwertes, der der korrigierten Fehlerspannung auf Basis der Ausgangsleistung entspricht, und Aufwärts- sowie Abwärtszählen des ersten Zählwertes, um die korrigierte Fehlerspannung zu ändern;
b2) Erfassen, ob der erste Zählwert überläuft oder unterläuft und Erzeugen des Erfassungssignals;
b3) Durchführen von Abwärts- und Aufwärtszählen entsprechend dem Erfassungssignal in der zu dem ersten Zählschritt in Schritt b1) umgekehrten Reihenfolge und Erzeugen eines zweiten Zählwertes; und
b4) Erzeugen einer Steuerspannung auf Basis der korrigierten Fehlerspannung und Erzeugen einer gleichmäßigen Steuerspannung, die ermittelt wird, indem der erste Zählwert zu dem zweiten Zählwert addiert wird, wenn der erste Zählwert überläuft oder unterläuft, wobei entsprechend dem Erfassungssignal in dem Schritt b1) Aufwärtszählen bis zu einem vorgegebenen Kompensationswert entsprechend dem Erfassungssignal durchgeführt wird, wenn der erste Zählwert unterläuft, und Abwärtszählen bis zu dem Kompensationswert durchgeführt wird, wenn der erste Zählwert überläuft, und in dem Schritt b3) Abwärtszählen von einem ersten Wert durchgeführt wird, bis der erste Zählwert der Kompensationswert wird, und dann der abwärts gezählte Wert auf den ersten Wert erneuert wird, wenn der erste Zählwert unterläuft, und Aufwärtszählen von einem zweiten vorgegebenen Wert durchgeführt wird, bis der erste Zählwert der Kompensationswert wird, und dann der aufwärts gezählte Wert auf den zweiten Wert erneuert wird, wenn der erste Zählwert überläuft.

## Revendications

1. Dispositif de compensation de température d'une diode laser (101), pour commander la puissance de sortie d'une diode laser (101) conformément à la variation d'une température, comportant :
un premier générateur (104-107) pour générer une tension d'erreur entre une tension correspondant à la puissance de sortie de la diode laser (101) et une tension de référence, le premier générateur comportant : un comparateur (104) pour comparer la tension correspondant à la puissance de sortie de la diode laser (101) et la tension de référence (105), et générer la tension d'erreur et un premier compteur (106) pour compter la tension d'erreur, générer la tension d'erreur corrigée en tant que première valeur de décompte sur la base de la puissance de sortie, et effectuer un comptage progressif et dégressif afin de changer la tension d'erreur en réponse à un signal de détection, et
un second générateur (108-110) pour générer une tension de commande corrigée en recevant la tension d'erreur, sur la base de la puissance de sortie et pour délivrer en sortie la tension de commande corrigée dans la diode laser (101) pendant une période de temps prédéterminée, le second générateur comportant : un détecteur (108) pour détecter un dépassement supérieur et inférieur de la première valeur de décompte et pour générer le signal de détection, un second compteur (109)pour effectuer un comptage dégressif et progressif en réponse au signal de détection, dans l'ordre inverse de celui du premier compteur (106), et un générateur de tension de commande (111, 112) pour générer la tension de commande corrigée sur la base de la tension d'erreur corrigée et pour générer la tension de commande corrigée obtenue en ajoutant la sortie du premier compteur (106) à la sortie du second compteur (110) lorsque la première valeur de décompte présente un dépassement supérieur et inférieur, dans lequel
la période de temps prédéterminée se termine lorsque le niveau de la tension d'erreur devient égal à une valeur de décalage prédéterminée,
le premier compteur (106) effectue un comptage progressif jusqu'à une valeur de décalage prédéterminée lorsque la première valeur de décompte présente un dépassement inférieur, et effectue un comptage dégressif jusqu'à la valeur de décalage lorsque la première valeur de décompte présente un dépassement supérieur, en réponse au signal de détection,
le second compteur (109) effectue un comptage dégressif depuis une première valeur jusqu'à ce que la sortie du premier compteur (106) devienne égale à la valeur de décalage, et alors renouvelle la valeur décomptée de manière dégressive du second compteur (109) à la première valeur, lorsque la première valeur de décompte présente un dépassement inférieur, et effectue un comptage progressif depuis une seconde valeur jusqu'à ce que la sortie du premier compteur (106) devienne égale à la valeur de décalage, et alors renouvelle la valeur décomptée de manière progressive du premier compteur (106) à la seconde valeur, lorsque la première valeur de décompte présente un dépassement supérieur,
et la valeur initiale de la première valeur et de la seconde valeur est établie à la valeur de décalage.

2. Dispositif de compensation de température selon la revendication 1, dans lequel :
les premier et second compteurs (106, 109) sont des premier et second compteurs progressifs/dégressifs, le second compteur progressif/dégressif (109) étant conçu pour effectuer un comptage progressif et dégressif conformément au signal de détection, et étant conçu pour compter dans l'ordre inverse de celui du premier compteur progressif/dégressif (106), et
le générateur de tension de commande comporte : un additionneur (111) et un convertisseur de courant (112), l'additionneur (111) étant conçu pour générer la tension de commande sur la base de la tension d'erreur corrigée et pour appliquer la tension de commande uniforme, obtenue en ajoutant la sortie du premier compteur progressif/dégressif (106) à celle du second compteur progressif/dégressif (110), dans le convertisseur de courant (112) lorsque la première valeur de décompte présente un dépassement supérieur et inférieur.

3. Dispositif selon la revendication 2, dans lequel le premier compteur progressif/dégressif (106) effectue un comptage progressif jusqu'à une valeur de décalage prédéterminée lorsque la première valeur de décompte présente un dépassement inférieur, et effectue un comptage dégressif jusqu'à la valeur de décalage lorsque la première valeur de décompte présente un dépassement supérieur.

4. Dispositif selon la revendication 3, dans lequel le second compteur progressif/dégressif (109) effectue un comptage dégressif depuis une première valeur jusqu'à ce que la sortie du premier compteur progressif/dégressif (106) devienne égale à la valeur de décalage, et alors renouvelle la valeur décomptée de manière dégressive du second compteur progressif/dégressif (109) à la première valeur conformément au signal de détection, lorsque la première valeur de décompte présente un dépassement inférieur, et effectue un comptage progressif depuis une seconde valeur jusqu'à ce que la sortie du premier compteur progressif/dégressif (106) devienne égale à la valeur de décalage, et renouvelle alors la valeur décomptée de manière progressive du premier compteur progressif/dégressif (106) à la seconde valeur, lorsque la première valeur de décompte présente un dépassement supérieur.

5. Dispositif selon la revendication 4, dans lequel la valeur initiale de la première valeur et de la seconde valeur est établie à la valeur de décalage.

6. Procédé de compensation de température d'une diode laser, pour commander la puissance de sortie d'une diode laser (101) conformément à un changement de température, comportant les étapes consistant à :
(a) générer une tension d'erreur entre en tension correspondant à la puissance de sortie de la diode laser et une tension de référence, et
(b) générer une tension de commande en corrigeant la tension d'erreur sur la base de la puissance de sortie et étendre la plage d'une tension de commande en délivrant en sortie une tension de commande corrigée dans la diode laser pendant une période de temps prédéterminée lorsque le niveau de la tension d'erreur présente un dépassement supérieur ou inférieur,
l'étape (b) comportant de plus les sous-étapes consistant à :
(b1) compter la tension d'erreur, générer une première valeur de décompte correspondant à la tension d'erreur corrigée sur la base de la puissance de sortie, et décompter de manière progressive et dégressive la première valeur de décompte afin de changer la tension d'erreur corrigée conformément à un signal de détection,
(b2) déterminer si la première valeur de décompte présente un dépassement supérieur ou inférieur et générer le signal de détection,
(b3) effectuer un comptage dégressif et progressif conformément au signal de détection, dans l'ordre inverse à celui de la première valeur de décompte de l'étape (b1), et générer une seconde valeur de décompte, et
(b4) générer une tension de commande sur la base de la tension d'erreur corrigée et générer une tension de commande uniforme obtenue en ajoutant la première valeur de décompte à la seconde valeur de décompte, lorsque la première valeur de décompte présente un dépassement supérieur ou inférieur, le comptage étant effectué jusqu'à une valeur prédéterminée de décalage conformément au signal de détection, lorsque la première valeur de décompte présente un dépassement inférieur, et un comptage dégressif est effectué jusqu'à la valeur de décalage lorsque la première valeur de décompte présente un dépassement supérieur, à l'étape (b1), et un comptage dégressif est effectué à partir d'une première valeur jusqu'à ce que la première valeur de décompte devienne la valeur de décalage, et alors la valeur décomptée de manière dégressive est renouvelée à la première valeur, lorsque la première valeur de décompte présente un dépassement inférieur, et un comptage progressif est effectué à partir d'une seconde valeur prédéterminée jusqu'à ce que la première valeur de décompte devienne égale à la valeur de décalage, et alors la valeur décomptée de manière progressive est renouvelée à la seconde valeur, lorsque la première valeur de décompte présente un dépassement supérieur, conformément au signal de détection, à l'étape (b3).
